# EUROPÄISCHE PATENTSCHRIFT

(11) **EP 0 780 247 B1**
(45) Veröffentlichungstag und Bekanntmachung des Hinweises auf die Patenterteilung: **06.06.2001**
(21) Anmeldenummer: 96120691.9
(22) Anmeldetag: 20.12.1996
(51) Int. Cl.: B60C 11/00, B60C 11/04, B60C 11/03

(54) **Radialreifen**
Radial tyre
Bandage pneumatique radial

(30) Priorität: 23.12.1995 DE 19548730
(43) Veröffentlichungstag der Anmeldung: 25.06.1997
(73) Patentinhaber: Continental Aktiengesellschaft, 30165 Hannover (DE)
(72) Erfinder: Dodt, Thomas, Dr., 30455 Hannover (DE); Hahn, Michael, 30659 Hannover (DE); Trabandt, Hagen, 31319 Sehnde (DE); Gauterin, Frank, 31535 Neustadt/Rbge. (DE)

(56) Entgegenhaltungen:
- EP-A- 0 062 970
- EP-A- 0 066 531
- US-A- 2 034 811
- PATENT ABSTRACTS OF JAPAN vol. 008, no. 120 (M-300), 6.Juni 1984 & JP 59 026306 A (HONDA GIKEN KOGYO KK), 10.Februar 1984,
- PATENT ABSTRACTS OF JAPAN vol. 017, no. 455 (M-1466), 20.August 1993 & JP 05 104909 A (SUMITOMO RUBBER IND LTD), 27.April 1993,
- PATENT ABSTRACTS OF JAPAN vol. 012, no. 490 (M-779), 21.Dezember 1988 & JP 63 212105 A (BRIDGESTONE CORP), 5.September 1988,

## Beschreibung

Die vorliegende Erfindung betrifft einen Radialreifen, insbesondere für die Antriebsräder von Lastkraftwagen oder Bussen, mit einem Laufstreifenprofil gemäß dem Oberbegriff des Anspruches 1.

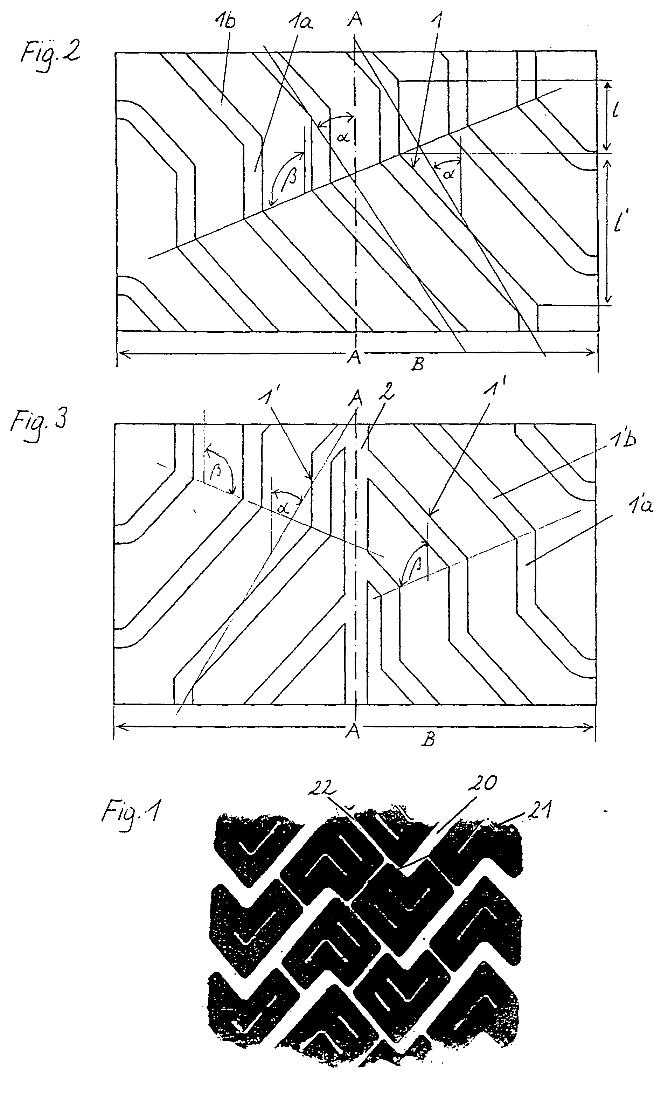

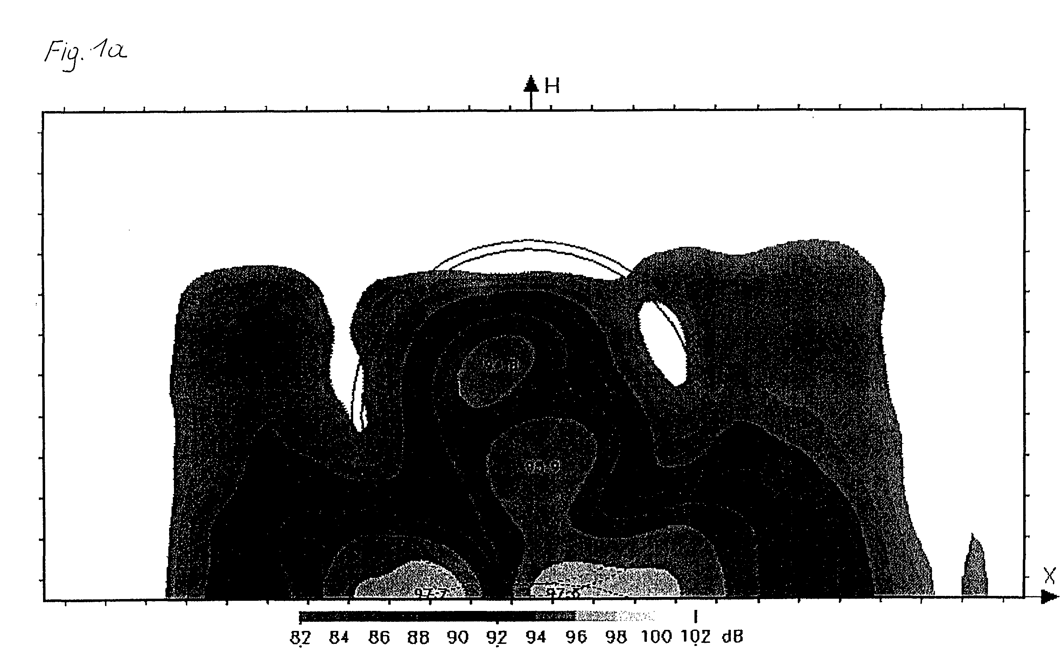

Radialreifen, die insbesondere für die Antriebsräder von Lastkraftwagen geeignet sind, weisen im allgemeinen ein Laufstreifenprofil mit einer ausgeprägten Klotzstruktur auf. Fig. 1 zeigt den verkleinerten Latschabdruck eines typischen Traktionsprofil eines aus dem Stand der Technik bekannten LKW-Reifens. Dieses Profil besitzt vier Klotzreihen, wobei die Klötze durch die Ausbildung von schräg über die Lauffläche verlaufenden breiten Rillen 20 sowie durch gleichsinnig schräg verlaufende schmale Rillen 21 und zu diesen gegensinnig verlaufenden schmalen Rillen 22, eine etwa V-förmige Grundgestalt besitzen. Aus der AT-B- 394.337 ist ferner ein LKW-Reifen bekannt, dessen Laufstreifenprofil bezüglich Traktion und Längsführung optimiert ist und sich im wesentlichen aus einer zentralen, entlang der Reifenäquatorlinie verlaufenden Klotzreihe, zwei mittleren und zwei schulterseitig verlaufenden Klotzreihen zusammensetzt, die durch in Umfangsrichtung verlaufende Nuten voneinander getrennt sind.

Ein Reifen der eingangs genannten Art ist beispielsweise aus der EP-A-0 066 531 bekannt. Diese Druckschrift befaßt sich mit der Verbesserung des Abriebsbildes des Laufstreifens eines LKW-Reifens. Dazu wird das Profil aus gegenüber der Umfangsrichtung leicht geneigt verlaufenden Profilrippen zusammengesetzt, wobei sich die diese Profilrippen voneinander trennenden Rillen abwechselnd aus gegenüber der Umfangsrichtung schräg verlaufenden und in Umfangsrichtung verlaufenden Rillenabschnitten zusammensetzen.

Die in den letzten Jahren seitens der Kraftfahrzeughersteller verstärkt gesetzten Maßnahmen zur Verminderung der durch den Straßenverkehr verursachten Lärmbelästigung, wie etwa das Anbringen von schalldämmenden Motorkapselungen, hatte zur Folge, daß das Reifen/Fahrbahngeräusch immer mehr zur dominierenden Lärmquelle wurde. Dabei entwickeln LKW-Reifen aus konstruktionsbedingten Gründen ein als störender empfundenes Rollgeräusch als PKW-Reifen. Die am Reifen selbst zur Verminderung der Lärmbelästigung gesetzten Maßnahmen zielten bisher insbesondere darauf ab, das Reifen/Fahrbahngeräusch hinsichtlich einer Verteilung der auftretenden Frequenzen auf ein breiteres Frequenzband zu beeinflussen, was als angenehmer empfunden wird, als eine Schallabstrahlung mit vorherrschenden Frequenzen. Die diesbezüglich am Laufstreifenprofil eines Reifens gesetzten Maßnahmen erschöpften sich im wesentlichen in der Anwendung des Verfahrens der Pitchlängenvariation.

In jüngster Vergangenheit wurden ferner Überlegungen angestellt, in den Radkästen der Kraftfahrzeuge schallabsorbierende Vorrichtungen anzubringen. So ist es beispielsweise aus dem deutschen Patent Nr. 4 241 518 bekannt, am Radkasten eine Umkleidung anzuordnen, die sich aus Kammern zusammensetzt, die als Helmholtz-Resonatoren ausgebildet sind. Eine solche Vorrichtung wirkt als passiver Schallabsorber und soll den über die Luft übertragenen Anteil des vom Kraftfahrzeug emittierten Reifen/Fahrbahngeräusches reduzieren. Eine weitere, als passiver Schallabsorber wirkende Vorrichtung, die als Lochabsorber ausgeführt ist, ist in der DE-A-4 415 983 der Anmelderin beschrieben. In der DE-A-4 402 699 der Anmelderin ist ferner eine bevorzugt am Radkasten anzubringende Vorrichtung geoffenbart, die ein System von Schallabsorbern aufweist, die auf bestimmte Geräuschanteile im Reifen/Fahrbahngeräusch, deren Frequenzen sich proportional zur Raddrehzahl ändern, abgestimmt ist und aktiv angepaßt werden kann.

Die Wirkung solcher Vorrichtungen beschränkt sich jedoch auf jenen Teil des während des Abrollens des Reifen entstehenden Schallfeldes, das von der räumlichen Ausdehnung der Vorrichtung erfaßt wird.

Hier setzt nun die gegenständliche Erfindung ein, deren Aufgabe darin besteht, am Reifen, insbesondere am Laufstreifenprofil, Maßnahmen zu setzen, die einerseits die Effektivität von passiven oder aktiven schallabsorbierenden Vorrichtungen am Kraftfahrzeug, insbesondere am Radkasten, erhöhen helfen und andererseits auch das Reifen/Fahrbahngeräusch, sowohl hinsichtlich des emittierten Frequenzspektrums als auch hinsichtlich des Schalldruckpegels, günstig beeinflussen.

Die gestellte Aufgabe wird erfindungsgemäß durch die im kennzeichnenden Teil des Anspruches 1 enthaltenen Merkmale gelöst.

Von der Bodenaufstandsfläche her betrachtet stellt sich bei Reifen mit derartigen, erfindungsgemäß gestalteten Laufstreifenprofilen während des Abrollens des Reifens die Situation ein, daß durch den erfindungsgemäßen Verlauf der Hauptrillen eine möglichst gleichphasige Schallabstrahlung an den dem Ein- und Auslauf zugewandten und den seitlichen Öffnungen der Profilrillen erfolgt. In diesem Zusammenhang ist es besonders günstig, wenn die Hauptrillen derart verlaufen, daß beim Durchang des Reifens durch die Bodenaufstandsfläche der genannte Winkel im Mittel über einen Großteil des Verlaufes der Rillen möglichst nahe an 30° herankommt beziehungsweise bevorzugt 30° beträgt. Wie bekannt, bilden sich in Profilrillen, die durch den Kontakt mit der Fahrbahn zu Kanälen abgeschlossen werden, Rillenresonanzen aus. Diese Rillenresonanzen strahlen maximale Schallenergie bei einer der Frequenzen ab, deren zugehörige Wellenlänge 2/(n+1) multipliziert mit der Länge des Kanals entspricht (n = 1). Die Energieverteilung in den angeregten Resonanzen ist abhängig von der Fahrgeschwindigkeit und der Anzahl der Klötze, fahrbahnabhängigen Parametern, wie beispielsweise Rauhtiefe und Porenvolumen des Fahrbahnbelages, und spezifischen Eigenmoden des Reifenaufbaus. Da beide offenen Enden eines solchen Kanals kohärent abstrahlen, bildet sich ein räumliches Interferenzmuster aus mit Abstrahlungsrichtungen mit konstruktiver Interferenz, was einer Schallverstärkung, und destruktiver Interferenz, was einer Schallauslöschung entspricht. Bei einem nach der Erfindung gestalteten Laufstreifenprofil bildet sich das Interferenzmuster dergestalt aus, daß die Schallabstrahlung hauptsächlich in und gegen die Fahrtrichtung erfolgt, seitlich des Reifens jedoch eine stark verminderte Schallabstrahlung. Diese gegenseitige Anordnung der Rillen unterstützt wirkungsvoll eine bevorzugte Schallabstrahlung in und gegen die Fahrtrichtung und eine seitlich des Reifens deutlich verminderte Schallabstrahlung.

Für das Traktions- und Bremsverhalten sowie die Aquaplaningeigenschaften des Reifens ist es von Vorteil, wenn die zumindest im wesentlichen in Umfangsrichtung verlaufenden Rillenabschnitte einen Verlauf aufweisen, der um höchstens 5° von der Umfangsrichtung abweicht.

Dabei ist es für die Reduktion der Schallabstrahlung in seitlicher Richtung günstig, wenn eine etwaige geringfügige Neigung der im Wesentlichen in Umfangsrichtung verlaufenden Rillenabschnitte in einer Richtung erfolgt, die mit der Neigungsrichtung der geneigten Rillenabschnitte übereinstimmt. In diesem Zusammenhang ist es auch günstig, wenn die auf die Umfangsrichtung projizierte Länge der geneigten Rillenabschnitte größer ist als die ebenfalls auf die Umfangsrichtung projizierte Länge der in Umfangsrichtung bzw. im wesentlichen in Umfangsrichtung verlaufenden Rillenabschnitte.

In Querrichtung des Laufstreifenprofiles wird die Gesamtanzahl der Rillen zwischen 6 und 12, insbesondere zwischen 8 und 10 gewählt. Die Rillenanzahl wird dabei vorteilhafterweise an die Reifendimension gekoppelt, was günstig ist, um, neben der erzielbaren Schallabstrahlung andere Profileigenschaften nicht negativ zu beeinflussen. Aus diesem Grund ist es auch von Vorteil, wenn die Breite der Rillen [mm] ermittelt wird aus: Rillenbreite = √B/y, mit B als Reifenbreite und mit 1,4 ≦ y ≦ 2,6, insbesondere 1,6 ≦ y ≦ 2,1, wobei die Reifenbreite in Millimeter bestimmt wird und in die Berechnung der Rillenbreite als dimensionslose Zahl eingeht.

Bei einer bevorzugten Ausführungsvariante der Erfindung ist das Laufstreifenprofil laufrichtungsgebunden gestaltet, wobei ein Profilbereich mit Rillen vorgesehen ist, die gegensinnig zu den Rillen in einem zweiten Profilbereich verlaufen. Dadurch können die Vorteile einer laufrichtungsgebundenen Profilgestaltung mit den Vorteilen der gegenständlichen Erfindung kombiniert werden. Bei dieser Ausführungsform ist dabei günstig, wenn die laufstreifeninnenseitig gelegenen Enden der aus beiden Pofilbereichen kommenden Rillen in zumindest eine Mittelrille einmünden. Diese Maßnahme unterstützt die gewünschte kohärente und gegenphasige Schallabstrahlung.

Ein gegenseitiger Versatz in Umfangsrichtung der in beiden Profilbereichen verlaufenden Rillen ist bei dieser Ausführungsvariante ebenfalls vorteilhaft, da dadurch das Reifen/Fahrbahngeräusch insgesamt günstig beeinflußbar ist.

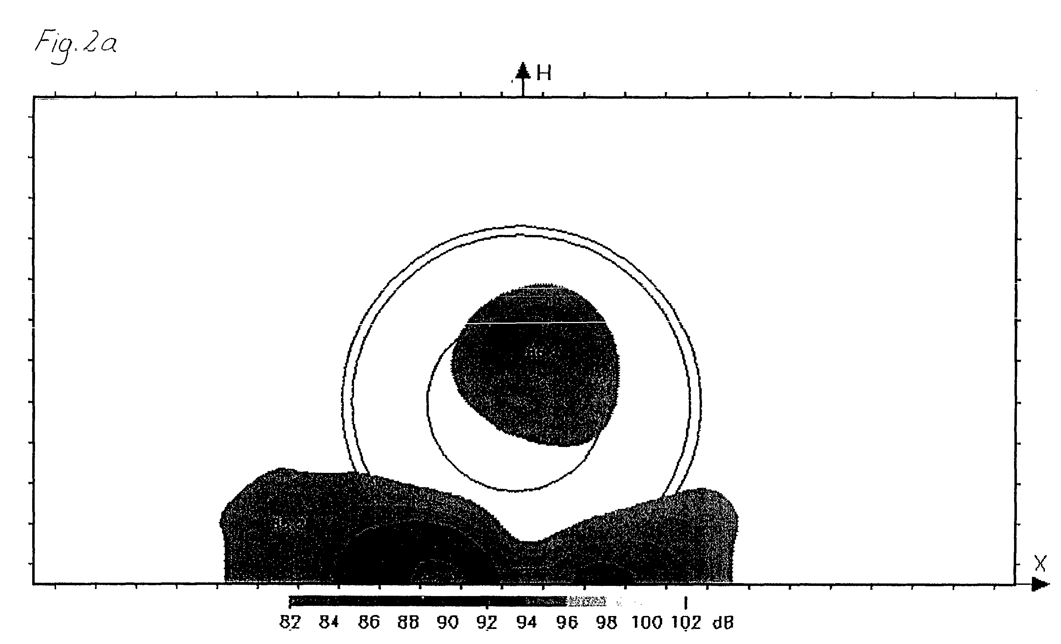

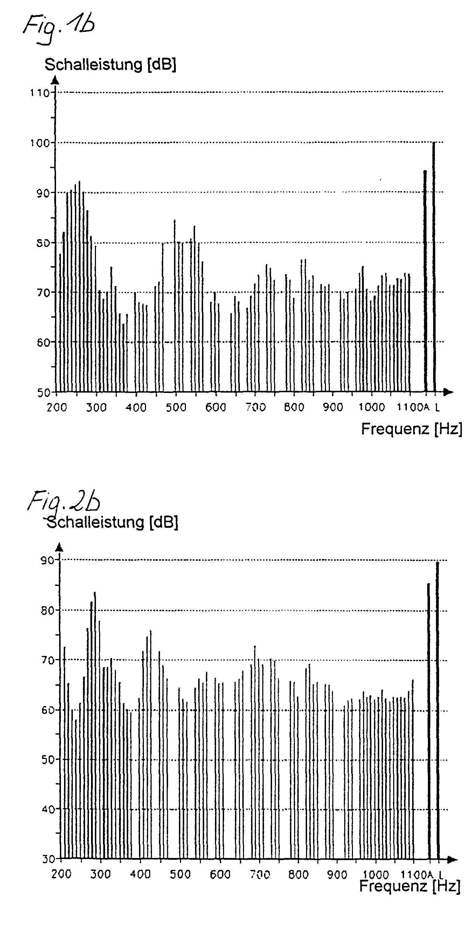

Weitere Merkmale, Vorteile und Einzelheiten der Erfindung werden nun anhand der Zeichnung, die mehrere Ausführungsbeispiele darstellt, näher beschrieben. Dabei zeigen die Fig. 2 und 3 Draufsichten auf Teilabwicklungen zweier erfindungsgemäßer Ausführungsvarianten von Laufstreifenprofilen, die jeweils prinzipielle Ausgestaltungsmöglichkeiten sind, wobei die dargestellten Ausschnitte zumindest im wesentlichen dem Latschabdruck entsprechen, Fig. 1 eine Draufsicht auf den verkleinerten Latschabdruck eines Laufstreifenprofiles eines Reifens aus dem Stand der Technik, Fig. 1a, 2a Abbildungen von Schallfeldmessungen und Fig. 1b, 2b die jeweils zugehörigen, gemessenen Frequenzspektren.

Die erfindungsgemäß gestalteten Laufstreifenprofile sind insbesondere für Triebachsreifen von LKWs vorgesehen. Der sonstige Aufbau der LKW-Reifen kann in herkömmlicher Art und Weise erfolgen und umfaßt insbesondere neben dem Laufstreifen ein Paar von Wulstbereichen mit Wulstkemen, ein Paar von Seitenwänden, eine Radialkarkasse, deren freie Enden um die Wulstkerne herumgeführt sind, und einen mehrlagigen Gürtel. Als Verstärkungskord für die ein- oder mehrlagige Karkasse kommt im allgemeinen Stahlkord in Frage, ferner auch organische Faser, wie beispielsweise Nylon oder Polyester, oder auch ein aromatisches Polyamid. Der Gürtel umfaßt drei bis vier Lagen, die in jeder Lage parallel zueinander verlaufende Korde aus Stahl oder ebenfalls organischen Faserkord aufweisen, die bezüglich des Reifenäquators unter bestimmten Winkeln verlaufen.

Die vorliegende Erfindung befaßt sich grundsätzlich damit, Laufstreifenprofile für Reifen derart zu gestalten, daß einerseits das Reifen/Fahrbahngeräusch sowohl bezüglich Schalldruckpegel als auch Verteilung der auftretenden Frequenzen insgesamt günstig beeinflußt wird, andererseits eine in und gegen die Fahrtrichtung (Abrollrichtung) des Reifens möglich weitgehend gerichtete Schallabstrahlung und eine Reduzierung der Schallabstrahlung in seitlicher Richtung unterstützt wird. Dadurch soll der erfindungsgemäße Reifen vor allem an Kraftfahrzeugen, vor allem an LKW oder Bussen, einsetzbar sein, die an den Radkästen mit geeigneten Vorrichtungen zur Schallabsorbtion versehen sind. Die zur Erreichung dieses Zieles gesetzten Maßnahmen werden nun anhand der grundsätzlichen Ausführungsvarianten näher erläutert. Dabei werden die in den Zeichnungsfiguren 1 und 2 dargestellten Laufstreifenprofile jeweils über ihre Breite B, die der Breite in der Bodenaufstandsfläche gemäß E.T.R.T.O. Standards Manual entspricht, betrachtet.

Fig. 2 zeigt nun eine grundsätzliche Ausführungsvariante der Erfindung mit im wesentlichen diagonal über die Laufstreifenbreite B verlaufenden Rillen 1, die parallel oder im wesentlichen parallel zueinander verlaufen. Jede Rille 1 setzt sich aus einer alternierenden Abfolge von Rillenabschnitten 1a und 1b zusammen, wobei die Rillenabschnitte 1a in Umfangsrichtung oder unter einem Winkel von bis zu 5° und die Rillenabschnitte 1b unter einem größeren spitzen Winkel zur Umfangsrichtung verlaufen. Die Anordnung bzw. Auslegung der Rillenabschnitte 1a, 1b wird derart getroffen, daß die mittleren Gesamtwinkel α der Rillen 1, definiert als die Winkel, die in grundsätzlicher Erstreckungsrichtung der Rillen 1 gezogene, insbesondere gerade Linien mit der Umfangsrichtung (Äquatorlinie A-A) einschließen, und zwar im Latschabdruck bzw. während des Abrollens beim Durchgang durch die Bodenaufstandsfläche, 30 +/- 20°, insbesondere 30 +/- 10°, betragen. Die auf eine Gerade parallel zur Umfangsrichtung projizierte Länge l der geneigten Rillenabschnitte 1b sollte größer sein als die gleichermaßen ermittelte projizierte Länge l' der Rillenabschnitte 1a. Die Rillen 1 besitzen somit eine sich schräg über den Laufstreifen erstreckende Zick-zack-Form, wobei abweichend von dieser Form die einzelnen Rillenabschnitte 1a, 1b auch über abgerundete Verbindungsbereiche ineinander übergehen können. Eine etwaige Neigung der Rillenabschnitte 1a relativ zur Umfangsrichtung wird bevorzugt gleichsinnig zur Neigung der Rillenabschnitte 1b gewählt.

In Querrichtung des Profiles wird die gegenseitige Anordnung der Rillen 1 derart getroffen, daß die Knick- bzw. Verbindungsstellen zwischen den in Reifenquerrichtung benachbarten Rillen 1 jeweils einen Versatz in Reifenumfangsrichtung besitzen, wobei dieser Versatz dadurch definiert ist, daß Linien, insbesondere gerade, die die einander zugeordneten Knickstellen bzw. geknickten Verbindungsbereiche miteinander verbinden, einen Winkel β von 120 +/- 20°, insbesondere 120 +/- 10°, mit der Reifenumfangsrichtung einschließen. Im Bereich der Laufstreifenränder geht jede Rille 1 über eine gerundete Knickstelle, in die außerhalb der Bodenaufstandsfläche liegenden Schulterbereiche über.

Bei einem derart gestalteten Laufstreifenprofil wirken die Rillen 1 durch ihre erfindungsgemäße Anordnung wie gegenphasig schwingende Schallquellen in seitlicher Richtung, es wird ein räumliches Interferenzmuster erzeugt, das, wie Schallfeldmessungen, auf die später noch näher eingegangen wird, bestätigt haben, eine seitlich des Reifens deutlich verminderte Schallabstrahlung zur Folge hat.

Reifen mit einem derartigen Laufstreifenprofil können insbesondere jeweils mit links- und rechtssteigenden Profilrillen 1 als Zwillingsbereifung montiert werden. Es ist jedoch auch eine Anordnung solcher Reifen am Fahrzeug derart möglich, daß sie als Einzel- oder Zwillingsbereifung mit auf jeder Fahrzeugseite gleicher Neigung der Profilrillen 1 montiert werden, um durch die fahrzeugbezogene gegensinnige Steigung der Profilrillen 1 ein profilrilleninduziertes Kräftegleichgewicht am Fahrzeug zu unterstützen.

Die Anzahl der Rillen 1, in Querrichtung des Laufstreifenprofiles betrachtet, wird zwischen 6 und 12, insbesondere zwischen 8 und 10, gewählt. Die Rillenbreite [mm] wird bei gegebener Reifenbreite in mm (Breite des Reifens gemäß den maximalen Reifenbetriebsmaßen aus E.T.R.T.O. Standards) wie folgt ermittelt: Rillenbreite = √Reifenbreite / y, mit 1,4 ≤ y ≤ 2,6, insbesondere 1,6 ≤ y ≤ 2,1, wobei die Reifenbreite als dimensionslose Zahl in diese Berechnungen eingeht. Über ihren Verlauf werden die Rillen 1 vorzugsweise gleich breit gestaltet, wobei sämtliche Rillen 1 die gewählte Breite aufweisen sollten. Der Querschnitt der Rillen 1 kann U-förmig, V-förmig oder dergleichen, asymmetrisch oder symmetrisch, ausgestaltet werden. Es ist ferner möglich, an sich bekannte, steinabweisende Maßnahmen am Rillengrund, beispielsweise das Vorsehen von im Querschnitt trapezförmigen Grundanhebungen, zu treffen, die, wie festgestellt wurde, die akustischen Wirksamkeit der erfindungsgemäßen Profilgestaltung nicht beeinträchtigen.

Zusätzlich kann, muß aber nicht, zumindest eine in Umfangsrichtung umlaufende Mittelnut, die gerade, gezackt oder wellenförmig gestaltet sein kann, vorzugsweise im mittleren Bereich des Laufstreifenprofiles angeordnet werden.

Fig. 3 zeigt eine Variante der in Fig. 2 dargestellten Ausführungsform, bei der entlang der Äquatorlinie A-A des Reifens eine in Umfangsrichtung umlaufende Umfangsnut 2 angeordnet ist und erfindungsgemäße Rillen 1' in beiden Laufstreifenhälften, wobei die in der einen Laufstreifenhälfte verlaufenden Rillen 1' gegenüber jenen in der zweiten Laufstreifenhälfte verlaufenden Rillen in Umfangsrichtung versetzt sind. In jeder Laufstreifenhälfte verlaufen daher vom jeweiligen Laufstreifenrand bis zur mittleren Umfangsnut 2 Rillen 1', die sich, wie oben beschrieben, aus der Umfangsrichtung zugeordneten Rillenabschnitten 1'a und geneigten Rillenabschnitten 1'b zusammensetzen, wobei hier eine Ausführungsform dargestellt ist, bei der in jeder Laufstreifenhälfte pro Rille 1' ein Rillenabschnitt 1'a vorgesehen ist. Die anhand der Beschreibung zu Fig. 2 definierten Winkel α und β sind auch hier, und zwar in den Laufstreifenhälften mit gegensinnigem Verlauf, gegeben. Insgesamt liegt hier somit ein laufrichtungsgebunden gestaltetes, gepfeiltes Laufstreifenprofil vor, bei dem die laufstreifeninnenseitig gelegenen Enden der in die Mittelnut 2 mündenden Rillenabschnitte 1'b beim Abrollen des Reifens zuerst in die Kontaktfläche des Reifens mit dem Untergrund eintreten. Die Einmündungsbereiche der Rillen 1' in die Mittelnut 2 können ebenso wie die Endbereiche an den Laufstreifenrändern gerundet bzw. gebogen gestaltet werden.

Grundsätzlich ist es auch möglich, die Rillen 1' in den beiden Laufstreifenhälften spiegelbildlich zur Äquatorlinie A-A anzuordnen, weiters ist es möglich, auf die Mittelnut 2 zu verzichten und bei spiegelbildlicher Anordnung der Rillen 1' die Rillen 1' aus jeder Laufstreifenhälfte jeweils paarweise ineinander einmünden zu lassen. Der erwünschte Effekt einer kohärenten, gegenphasigen Schallabstrahlung in bestimmten Richtungen tritt jedoch bei einer Ausführungsform mit Mittelnut 2 deutlicher hervor.

Das in Fig. 3 dargestellte Ausführungsbeispiel kann auch asymmetrisch gestaltet werden, indem beispielsweise in der einen Laufstreifenhälfte die Rillen 1' mit gegenseitigem geringerem Abstand angeordnet werden.

Es kann ferner von Vorteil sein, wenn die Rillen 1, 1' stellenweise Grundanhebungen aufweisen, sodaß an solchen Stellen nicht die volle Nuttiefe gegeben ist.

Bei beiden dargestellten Varianten kann ferner auch eine Pitchlängenvariation, die aus dem Stand der Technik hinlänglich bekannt ist, vorgenommen werden. Zusätzlich zu den dargestellten und beschriebenen Rillen bzw. Nuten können Lamellenfeineinschnitte und sonstige, insbesondere schmale, Einschnitte vorgesehen werden.

Fig. 1a, 2a und 1b, 2b veranschaulichen anhand von Abbildungen von gemessenen Schallfeldern und ermittelten Frequenzspektren die Wirksamkeit der gegenständlichen Erfindung. Fig. 1a und Fig. 2a zeigen in grau-kodierten, dreidimensionalen Darstellungen die vom Reifen in seitliche Richtung, durch eine Ebene parallel zur Reifenlaufrichtung, senkrecht zum Boden und in ca. 20 cm seitlicher Entfernung von der Reifenseitenwand abgestrahlte Schallintensität bzw. Schalleistung. Die Messungen erfolgten auf einem Trommelprüfstand bei einer Geschwindigkeit von 70 km/h. In den Darstellungen sind die Abmessungen des Reifens, der Felge und der Trommel, auf dem der Reifen abläuft, skizziert. Die Strichmarkierungen am die Darstellungen umschließenden Rechteck zeigen das Meßgitter. An jedem Kreuzungspunkt der diese Markierungen verbindenden senkrechten und waagrechten Linien wurde die Schallintensität senkrecht zur Zeichnungsebene bestimmt und als Grauwert dargestellt. Die Skala am Fuße der Darstellungen zeigt die jeder Graustufe zugeordnete Schalleistung in dB.

Fig. 1a zeigt nun die Ausdehnung und Art des von der Seite gemessenen Schallfeldes eines LKW-Reifens mit einem nach dem Stand der Technik ausgeführten Traktionsprofil. Der gemessene Reifen hatte die in Fig. 1 dargestellte Profilausgestaltung mit einer ausgeprägten Klotzstruktur. Wie aus dieser Darstellung ersichtlich ist, ist das Schallfeld dieses bekannten Reifens deutlich ausgebreitet mit der durch die verschiedenen Graustufen gekennzeichneten Intensitätsverteilung. Das in Fig. 1b dargestellte Frequenzspektrum zeigt ausgeprägte Spitzen in bestimmten Frequenzbereichen und einen hohen Schalldruckpegel.

Das mit einem Reifen, dessen Profil gemäß Fig. 2 ausgerüstet war, gemessene Schallfeld ist in Fig. 2a dargestellt. Die Schallabstrahlung in seitliche Richtung ist deutlich reduziert. Das aufgezeichnete Frequenzspektrum (Fig. 2b) zeigt weniger ausgeprägte Spitzen und eine deutlich herabgesetzte Schalleistung.

## Patentansprüche

1. Radialreifen, insbesondere für die Antriebsräder von Lastkraftwagen oder Bussen, mit einem Laufstreifenprofil, welches Hauptrillen aufweist, die zueinander zumindest im wesentlichen parallel verlaufen und die sich, beim Laufstreifenrandbereich beginnend, aus einer abwechselnden Aufeinanderfolge eines gegenüber der Umfangsrichtung geneigten und eines zumindest im wesentlichen in Umfangsrichtung verlaufenden Rillenabschnittes (1a, 1b, 1'a, 1'b) zusammensetzen, wobei beim Durchgang durch die Bodenaufstandsfläche die Winkel (α) zwischen der grundsätzlichen Erstreckungsrichtung der Hauptrillen (1, 1') und der Umfangsrichtung 30 +/- 20° betragen, dadurch gekennzeichnet, daß die Rillen (1, 1'), in Reifenumfangsrichtung betrachtet, gegeneinander versetzt sind, wobei die Knickstellen bzw. Verbindungsbereiche von Rillenabschnitten (1a, 1b, 1'a, 1'b) von einander benachbarten Rillen (1, 1') über die Profilbreite miteinander über gedachte, zueinander zumindest im Wesentlichen parallel verlaufende Linien verbindbar sind, wobei diese Linien einen Winkel von 120 +/- 20° mit der Reifenumfangsrichtung einschließen.

2. Radialreifen nach Anspruch 1, dadurch gekennzeichnet, daß die zumindest im wesentlichen in Umfangsrichtung verlaufenden Rillenabschnitte (1a, 1'a) einen Verlauf aufweisen, der um höchstens 5° von der Umfangsrichtung abweicht.

3. Radialreifen nach Anspruch 2, dadurch gekennzeichnet, daß eine etwaige geringfügige Neigung der im wesentlichen in Umfangsrichtung verlaufenden Rillenabschnitte (1a, 1'a) in einer Richtung erfolgt, die mit der Neigungsrichtung der geneigten Rillenabschnitte (1b, 1'b) übereinstimmt.

4. Radialreifen nach einem der Ansprüche 1 bis 3, dadurch gekennzeichnet, daß die auf die Umfangsrichtung projizierte Länge der geneigten Rillenabschnitte (1b, 1'b) größer ist als die ebenfalls auf die Umfangsrichtung projizierte Länge der in Umfangsrichtung bzw. im wesentlichen in Umfangsrichtung verlaufenden Rillenabschnitte (1a, 1'a).

5. Radialreifen nach einem der Ansprüche 1 bis 4, dadurch gekennzeichnet, daß die Gesamtanzahl der Rillen (1, 1') zwischen 6 und 12, insbesondere zwischen 8 und 10, beträgt.

6. Radialreifen nach einem der Ansprüche 1 bis 5, dadurch gekennzeichnet, daß die Breite der Rillen (1, 1') in mm ermittelt wird aus: Rillenbreite = √Reifenbreite /y, mit 1,4 ≤ y ≤ 2,6, insbesondere 1,6 ≤ y ≤ 2,1, wobei die Reifenbreite in Millimeter bestimmt wird und in die Berechnung der Rillenbreite als dimensionslose Zahl eingeht.

7. Radialreifen nach einem der Ansprüche 1 bis 6, dadurch gekennzeichnet, daß das Laufstreifenprofil laufrichtungsgebunden gestaltet ist, wobei ein Profilbereich mit Rillen (1') vorgesehen ist, die gegensinnig zu den Rillen (1') in einem zweiten Profilbereich verlaufen.

8. Radialreifen nach Anspruch 7, dadurch gekennzeichnet, daß die laufstreifeninnenseitig gelegenen Enden der Rillen (1, 1') aus beiden Pofilbereichen in zumindest eine Mittelrille (2) einmünden.

9. Radialreifen nach Anspruch 7 oder 8, dadurch gekennzeichnet, daß die in dem einen Pofilbereichen verlaufenden Rillen (1') gegenüber jenen im zweiten Profilbereich verlaufenden Rillen (1') in Umfangsrichtung versetzt sind.

10. Radialreifen nach einem der Ansprüche 7 bis 9, dadurch gekennzeichnet, daß die beiden Profilbereiche die beiden Laufstreifenhälften sind.

11. Radialreifen nach einem der Ansprüche 1 bis 10, dadurch gekennzeichnet, daß die Rillen (1, 1') über ihren Verlauf eine konstante Breite aufweisen, die vorzugsweise für sämtliche Rillen (1, 1') übereinstimmt.

12. Radialreifen nach Anspruch 1, dadurch gekennzeichnet, daß beim Durchgang durch die Bodenaufstandsfläche die Winkel (α) zwischen der grundsätzlichen Erstreckungsrichtung der Hauptrillen (1, 1') und der Umfangsrichtung 30 +/-10°, betragen.

13. Radialreifen nach Anspruch 1, dadurch gekennzeichnet, daß die Linien, die einander zugeordnete Knickstellen bzw. Verbindungsbereiche von Rillenabschnitten über die Profilbreite miteinander zumindest im wesentlichen verbinden, einen Winkel von 120 +/- 10° mit der Reifenumfangsrichtung einschließen.

## Claims

1. Radial tyre, more especially for the driving wheels of lorries or buses, including a tread strip profile which has main notches, which extend at least substantially parallel to each other, and which, commencing with the tread strip edge region, comprise an alternating sequence of a notch portion (1a, 1b, 1'a, 1'b), which is inclined relative to the circumferential direction and extends at least substantially in the circumferential direction, the angles (α) between the basic extension direction of the main notches (1, 1') and the circumferential direction being 30 +/- 20° during transit through the ground-engaging surface, characterised in that the notches (1, 1') are offset from each other when viewed with respect to the circumferential direction of the tyre, the bend points or resp. connecting regions of notch portions (1a, 1b, 1'a, 1'b) of notches (1, 1'), which lie adjacent each other, being interconnectable over the profile width via imaginary lines, which extend at least substantially parallel to each other, these lines forming an angle of 120 +/- 20° with the circumferential direction of the tyre.

2. Radial tyre according to claim 1, characterised in that the notch portions (1a, 1'a), which extend at least substantially in the circumferential direction, have a configuration which deviates from the circumferential direction by 5° at most.

3. Radial tyre according to claim 2, characterised in that any slight inclination of the notch portions (1a, 1'a), which extend substantially in the circumferential direction, is effected in a direction which is identical to the direction of inclination of the inclined notch portions (1b, 1'b).

4. Radial tyre according to one of claims 1 to 3, characterised in that the length of the inclined notch portions (1b, 1'b), when projected towards the circumferential direction, is greater than the length of the notch portions (1a, 1'a) extending in the circumferential direction, or resp. substantially in the circumferential direction, when also projected towards the circumferential direction.

5. Radial tyre according to one of claims 1 to 4, characterised in that the total number of notches (1, 1') is between 6 and 12, more especially between 8 and 10.

6. Radial tyre according to one of claims 1 to 5, characterised in that the width of the notches (1, 1') is ascertained in mm from: notch width = √tyre width / y, with 1.4 ≤ y ≤ 2.6, more especially 1.6 ≤ y ≤ 2.1, the tyre width being determined in millimetres and entering the calculation of the notch width as a dimensionless number.

7. Radial tyre according to one of claims 1 to 6, characterised in that the tread strip profile is adapted to the direction of travel, one profile region being provided with notches (1') which extend in the opposite direction to the notches (1') in a second profile region.

8. Radial tyre according to claim 7, characterised in that the ends of the notches (1, 1'), which are situated on the inner surfaces of the tread strip, terminate in at least one central notch (2) from both profile regions.

9. Radial tyre according to claim 7 or 8, characterised in that the notches (1'), which extend in the one profile region, are offset from those notches (1'), which extend in the second profile region, when viewed with respect to the circumferential direction.

10. Radial tyre according to one of claims 7 to 9, characterised in that the two profile regions are the two tread strip halves.

11. Radial tyre according to one of claims 1 to 10, characterised in that the notches (1, 1') have, over their configuration, a constant width which is preferably identical for all of the notches (1, 1').

12. Radial tyre according to claim 1, characterised in that the angles (α) between the basic extension direction of the main notches (1, 1') and the circumferential direction are 30 +/- 10° during transit through the ground-engaging surface.

13. Radial tyre according to claim 1, characterised in that the lines, which interconnect bend points or resp. connecting regions of notch portions associated with one another, at least substantially over the profile width, form an angle of 120 +/- 10° with the circumferential direction of the tyre.

## Revendications

1. Pneumatique radial, en particulier pour les roues motrices de camions ou d'autobus, comportant un profil de bande de roulement qui présente des cannelures principales qui sont au moins sensiblement orientées parallèlement l'une à l'autre et qui, en commençant près de la zone de bordure de la bande de roulement, sont composées d'une suite alternée d'un tronçon de cannelure incliné par rapport à la direction périphérique et d'un tronçon de cannelure orienté au moins sensiblement selon la direction périphérique (1a, 1b, 1'a, 1'b), dans le cas duquel, lors d'un parcours franchissant la surface d'appui au sol, les angles (α) entre la direction de principe de l'extension des cannelures principales (1, 1') et la direction périphérique valent 30 =/- 20°, caractérisé par le fait que, vu selon la direction périphérique du pneumatique, les cannelures (1, 1') sont décalées l'une par rapport à l'autre, les points anguleux ou zones de liaison de tronçons (1a, 1b, 1'a, 1'b) de cannelures (1, 1') voisines l'une de l'autre pouvant, sur la largeur du profil, être reliés l'un à l'autre par des lignes imaginaires, orientées au moins sensiblement parallèlement l'une à l'autre, ces lignes formant avec la direction périphérique du pneumatique un angle de 120 +/- 20°.

2. Pneumatique radial selon la revendication 1, caractérisé par le fait que les tronçons de cannelure (1a, 1'a) orientés au moins sensiblement selon la direction périphérique présentent une allure qui s'écarte de la direction périphérique au maximum de 5°.

3. Pneumatique radial selon la revendication 2, caractérisé par le fait qu'une éventuelle faible inclinaison des tronçons de cannelures (1a, 1'a) orientés sensiblement selon la direction périphérique se fait selon une direction qui coïncide avec la direction de l'inclinaison des tronçons de cannelure inclinés (1b, 1'b).

4. Pneumatique radial selon l'une des revendications 1 à 3, caractérisé par le fait que la longueur, projetée sur la direction périphérique, des tronçons de cannelure inclinés (1b, 1'b) est supérieure à la longueur, également projetée sur la direction périphérique, des tronçons de cannelure (la, 1'a) orientés selon la direction périphérique ou sensiblement selon la direction périphérique.

5. Pneumatique radial selon l'une des revendications 1 à 4, caractérisé par le fait que le nombre total des cannelures (1, 1') vaut entre 6 et 12, en particulier entre 8 et 10.

6. Pneumatique radial selon l'une des revendications 1 à 5, caractérisé par le fait que la largeur des cannelures (1, 1') en mm se détermine à partir de : largeur de la cannelure = 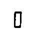 largeur du pneumatique/y, avec 1,4 ≤ y ≤ 2,6 en particulier 1,6 ≤ y ≤ 2,1, la largeur du pneumatique étant déterminée en i millimètres et intervenant dans le calcul de la largeur des cannelures sous forme d'un nombre sans dimension.

7. Pneumatique radial selon l'une des revendications 1 à 6, caractérisé par le fait que le profil de la bande de roulement a une allure liée à la direction du roulement, étant précisé qu'est prévue une zone du profil présentant des cannelures (1') qui, dans une seconde zone du profil, sont orientées en sens opposé à celui des cannelures (1').

8. Pneumatique radial selon la revendication 7, caractérisé par le fait que les extrémités, situées du côté intérieur de la bande de roulement, des cannelures (1, 1') des deux zones du profil débouchent dans au moins une cannelure médiane (2).

9. Pneumatique radial selon la revendication 7 ou 8, caractérisé par le fait que les cannelures (1') qui courent dans la première zone du profil sont décalées selon la direction périphérique par rapport aux cannelures (1') qui courent dans la seconde zone du profil.

10. Pneumatique radial selon l'une des revendications 7 à 9, caractérisé par le fait que les deux zones du profil sont les deux moitiés de la bande de roulement.

11. Pneumatique radial selon l'une des revendications 1 à 10, caractérisé par le fait que les cannelures (1, 1') présentent sur tout leur parcours une largeur constante qui de préférence coïncide pour toutes les cannelures (1, 1').

12. Pneumatique radial selon la revendication 1, caractérisé par le fait que, lors du parcours franchissant la surface d'appui au sol, les angles (α) entre la direction de principe de l'extension des cannelures principales (1, 1') et la direction périphérique valent 30 +/- 10°.

13. Pneumatique radial selon l'une des revendications 1, caractérisé par le fait que les lignes qui relient au moins sensiblement l'un à l'autre, sur la largeur du profil, les points anguleux, ou zones de liaison, associés l'un à l'autre, de tronçons de cannelures font avec la direction périphérique des pneumatiques un angle de 120 +/- 10°.
